Europäisches Patentamt

European Patent Office

Office européen des brevets

(19)

(11) Veröffentlichungsnummer: **0 310 830 B1**

(12) ## EUROPÄISCHE PATENTSCHRIFT

(45) Veröffentlichungstag der Patentschrift: **13.11.91**

(51) Int. Cl.5: **B01D 47/10**

(21) Anmeldenummer: **88114970.2**

(22) Anmeldetag: **14.09.88**

(54) Venturikühler für eine Rauchgasentschwefelungsvorrichtung.

(30) Priorität: **09.10.87 DE 8713583 U**

(43) Veröffentlichungstag der Anmeldung:
**12.04.89 Patentblatt 89/15**

(45) Bekanntmachung des Hinweises auf die
Patenterteilung:
**13.11.91 Patentblatt 91/46**

(84) Benannte Vertragsstaaten:
**DE GB IT**

(56) Entgegenhaltungen:
**DE-A- 1 571 770**
**FR-A- 1 381 960**
**FR-A- 2 146 280**
**US-A- 3 976 455**

(73) Patentinhaber: **THYSSEN INDUSTRIE AG**
**Am Thyssenhaus 1**
**W-4300 Essen 1(DE)**

(72) Erfinder: **Krause, Heinz**
**Rudolfstrasse 8**
**W-4130 Moers 2(DE)**
Erfinder: **Schulz, Horst**
**Goystrasse 35**
**W-4630 Bochum 1(DE)**

(74) Vertreter: **Dahlkamp, Heinrich-Leo, Dipl.-Ing.**
**Thyssen Industrie AG Patentabteilung Am**
**Thyssenhaus 1 Postfach 10 37 45**
**W-4300 Essen 1(DE)**

EP 0 310 830 B1

## Beschreibung

Die Erfindung betrifft einen Venturikühler für eine Rauchgasentschwefelungsvorrichtung mit mehreren, quer zur Kühlerlängsrichtung angeordneten Rohren mit Wassersprühdüsen. Bei derartigen Kühlern kommt es für die Wirksamkeit des durch die Sprühdüsen versprühten Wassers darauf an, daß die Geschwindigkeit der Rauchgase innerhalb eines bestimmten Bereiches gehalten wird; insbesondere darf die Geschwindigkeit der Rauchgase nicht unter einen Grenzwert absinken. Die pro Zeiteinheit durch den Venturikühler strömende Gasmenge ist durch die Betriebsbedingungen der Anlage, deren Abgase entschwefelt werden sollen, vorgegeben. Die Beeinflussung der Strömungsgeschwindigkeit erfolgt bei den bekannten Venturikühlern durch entsprechende Auslegung des Querschnitts. Wenn sich die Betriebsbedingungen grundlegend ändern, insbesondere wenn die anfallende Rauchgasmenge geringer wird, kann der Querschnitt durch Inneneinbauten an der Wandung des Venturikühlers verkleinert werden. Derartige Maßnahmen sind umständlich und aufwendig.

Ausgehend von diesem Stand der Technik wird die Aufgabe der Erfindung darin gesehen, einen Venturikühler anzugeben, bei dem der Querschnitt auf einfache Weise an die jeweiligen Erfordernisse anzupassen ist.

Diese Aufgabe wird bei einem Venturikühler der eingangs genannten Gattung dadurch gelöst, daß an den Rohren den Strömungsquerschnitt des Venturikühlers verengende, den Austritt der Wassersprühdüsen freilassende Schikanen angeordnet sind. Da die Rohre für die Wassersprühdüsen bei Venturikühlern leicht zugänglich und wegen des Erfordernisses der Wartungsmöglichkeit für die Sprühdüsen auch leicht, durch seitliches Herausziehen demontierbar eingerichtet sind, kann durch an den Rohren angebrachte Schikanen, die die Sprühdüsenöffnungen freilassen, der Strömungsquerschnitt in einfacher Weise schnell und einfach verkleinert werden. Die Rohre dienen dabei als Stützmittel für die Schikanen, die daher als einfache Blechkonstruktion, aus glasfaserverstärktem Kunststoff (GFK) od. dgl. ausgeführt werden können. Der Querschnittsanteil, den die Schikanen verdecken, kann durch deren Querschnitt gewählt werden und dadurch, daß eine größere oder geringere Anzahl der Rohre mit den Schikanen versehen wird, schnell und flexibel an die Betriebsbedingungen angepaßt werden. Durch die Einhaltung eines günstigen Bereiches der Strömungsgeschwindigkeit für die Rauchgase kann mit einer verhältnismäßig geringen zeitlichen Sprühwassermenge gearbeitet werden und die das Sprühwasser fördernde Pumpe entsprechend klein ausgelegt werden.

Im einzelnen kann die Erfindung wie folgt vorteilhaft ausgestaltet sein.

Dadurch, daß die Schikanen die Rohre umgebende Zylinder mit Öffnungen an den den Düsen gegenüberliegenden Stellen sind, können diese leicht durch einfaches Überschieben an den Rohren angebracht werden. Die Öffnungen können dabei entweder als Einzelöffnungen gegenüber den Düsen ausgebildet sein oder als durchlaufender Schlitz in der Mantellinie des Blechzylinders.

Eine Veränderung des Strömungsquerschnitts während des Betriebs ohne Ein- und Ausbau bei sich ändernden anfallenden Rauchgasmengen kann dadurch erreicht werden, daß die Schikanen sich in Strömungslängsrichtung erstreckende, verschwenkbare Fahnen aufweisen.

Dadurch, daß die verschwenkbaren Fahnen eine in Strömungsrichtung liegende Breite haben, die so groß ist wie der Anstand je zweier Rohre, kann durch ihr Verschwenken bis zum Anschlag an das Nachbarrohr der freie Querschnitt des Venturikühlers fast völlig verschlossen werden.

Die Verschwenkbarkeit der Fahnen kann dadurch leicht ausgeführt werden, daß die Fahnen an den die Rohre umgebenden, auf den Rohren drehbar angeordneten Zylindern befestigt sind, deren Öffnungen in Drehrichtung so groß sind, daß sie die Düsen in jeder Stellung freilassen.

Gute Stabilität der verschwenkbaren Fahnen bei strömungsmäßig günstigem Verhalten kann dadurch erreicht werden, daß je zwei Fahnen beidseitig der Achse des drehbaren Zylinders an diesem befestigt und die Fahnen am unteren Rand verbunden sind.

Diese Verbindung kann so ausgeführt sein, daß sie unten eine scharfe Kante bildet. Es ist auch möglich, die Verbindung in Form einer Abrundung auszugestalten, so daß die beiden, beidseitig mit dem Zylinder verbundenen Fahnen annähernd parallel zueinander verlaufen.

Ein besonders großer, freier maximaler Strömungsquerschnitt kann dadurch erreicht werden, daß die verschwenkbaren Fahnen an den Rohren befestigt sind und die Rohre um ihre Achse drehbar gelagert sind.

Im folgenden wird anhand einer Zeichnung ein Ausführungsbeispiel der Erfindung erläutert. Es zeigen im einzelnen

Fig. 1 ein Venturirohr für eine Rauchgasentschwefelungsanlage im Schnitt mit die Rohre umgebenden Zylindern,

Fig. 2-4 Schnitte durch verschiedene Ausführungsarten des Venturikühlers mit die Rohre umgebenden Zylindern und verschwenkbaren Fahnen,

Fig. 5 einen Schnitt durch einen Venturikühler mit verschwenkbaren Fahnen, die an den Rohren befestigt sind.

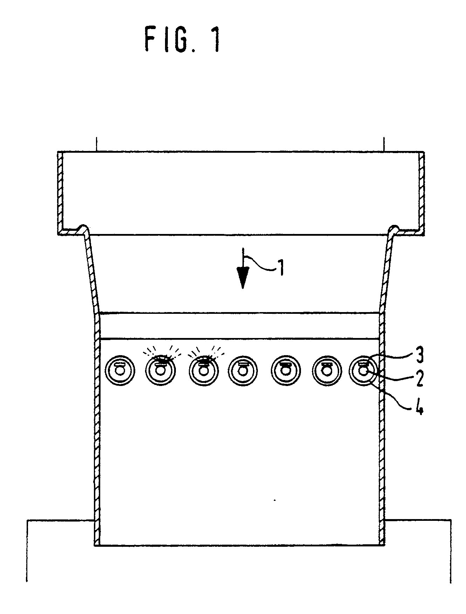

Der Venturikühler für eine Rauchgasentschwefelungsvorrichtung weist mehrere, quer zur Kühlerlängsrichtung 1 angeordnete Rohre 2 mit Wassersprühdüsen 3 auf. Der Querschnitt des Kühlers ist durch Schikanen, die den Austritt der Wassersprühdüsen 3 freilassen, verengt. Nach Figur 1 bestehen diese Schikanen aus Zylindern 4, die die Rohre 2 umgeben und den Austritt der Wassersprühdüsen 3 freilassen.

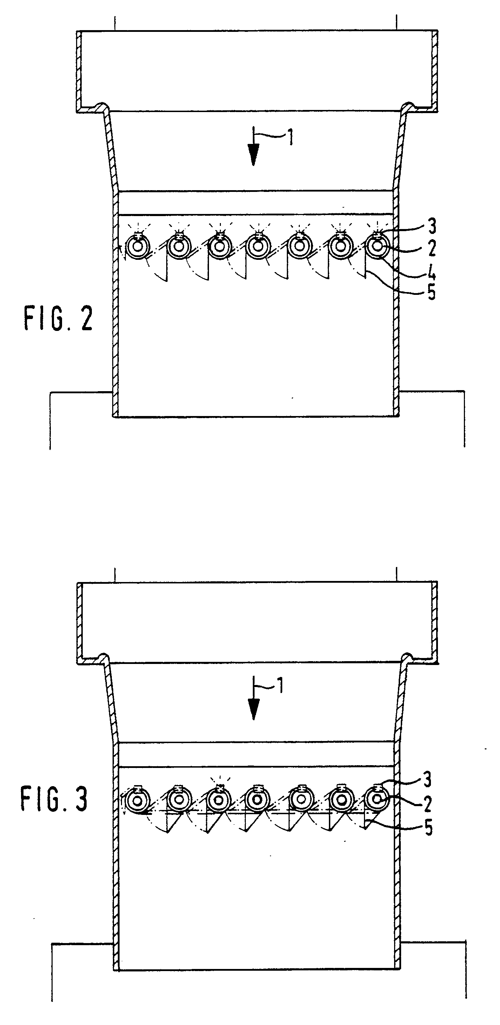

Nach Fig. 2 sind mit den Zylindern 4 sich in der Strömungsrichtung, die mit der Kühlerlängsrichtung 1 übereinstimmt, erstreckende, verschwenkbare Fahnen 5 verbunden. Die Zylinder 4 sind um ihre Längsachse drehbar angeordnet. Die verschwenkbaren Fahnen 5 weisen eine in Strömungsrichtung liegende Breite auf, die so groß ist wie der gegenseitige Abstand je zweier Rohre 2.

Nach Fig. 3 sind zwei verschwenkbare Fahnen beidseitig mit dem drehbaren Zylinder 4 verbunden. Sie weisen am unteren Ende eine scharfkantige Verbindung auf. Die Fahnen 5 nach Fig. 3 sind aus Blech gefertigt. Sie können entweder an der unteren, scharfen Kante zusammengeschweißt oder gebördelt sein, einfacher jedoch einteilig ausgeführt und vor der Verbindung mit dem Zylinder 4 auf einer Kantbank abgekantet worden sein.

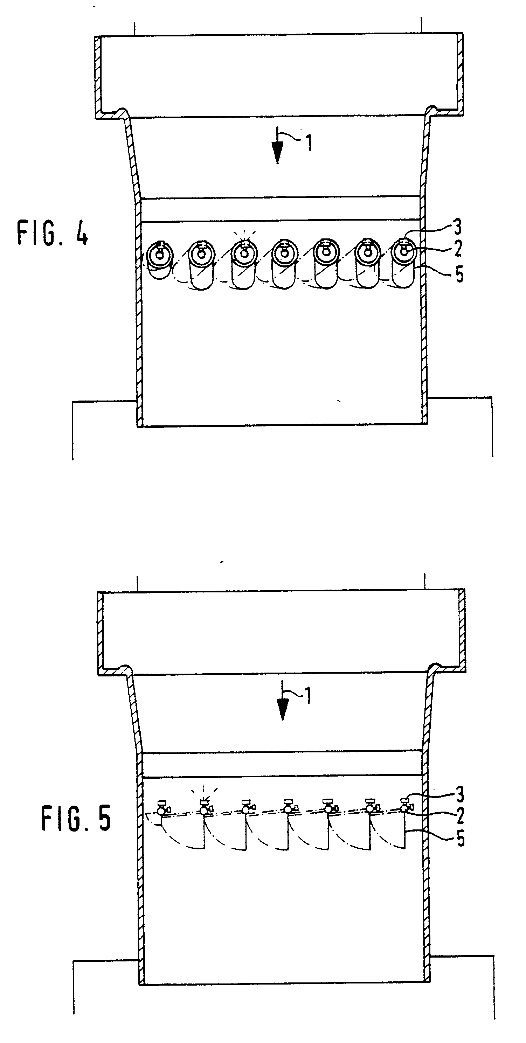

Nach Fig. 4 ist die untere Verbindung der beiden Fahnen 5 rund ausgeführt.

Nach Fig. 5 sind die verschwenkbaren Fahnen 5 mit den Rohren 2 verbunden. Die Rohre 2 sind um ihre Achse drehbar gelagert.

Die Zylinder 4 nach Fig. 1 werden je nach dem Grad der gewünschten Verminderung des Querschnitts über eines oder mehrere der Rohre 2 durch Herausziehen der Rohre, Überstülpen und Wiedereinsetzen der Rohre in den Venturikühler montiert.

Nach Fig. 2 wird der Querschnitt ohne Aus- und Einbau durch Drehen der Zylinder 4 und dadurch Verschwenken der Fahnen 5 mehr oder weniger verkleinert. Die Stellung der Fahnen bei kleinstem Querschnitt ist strichliert gezeichnet. Ebenso erfolgt die Querschnittsverkleinerung nach den Figuren 3 und 4, wobei durch die Verbindung von je zwei Fahnenteilen 5 am unteren Ende eine hohe Stabilität erreicht wird.

Nach Fig. 5 wird der Querschnitt durch Drehen der Rohre 2, wobei die Fahnen 5 verschwenkt werden, verändert.

## BEZUGSZEICHENLISTE

1 Kühlerlängsrichtung (Strömungsrichtung)
2 Rohr
3 Wassersprühdüse
4 Zylinder
5 verschwenkbare Fahnen

## Patentansprüche

1. Venturikühler für eine Rauchgasentschwefelungsvorrichtung mit mehreren, quer zur Kühlerlängsrichtung (1) angeordneten Rohren (2) mit Wassersprühdüsen (3), dadurch gekennzeichnet, daß an den Rohren (2) den Strömungsquerschnitt des Venturikühlers verringernde, den Austritt der Wassersprühdüsen (3) freilassende Schikanen angeordnet sind.

2. Venturikühler nach Anspruch 1, dadurch gekennzeichnet, daß die Schikanen die Rohre (2) umgebende Zylinder (4) mit Öffnungen an den den Wassersprühdüsen (3) gegenüberliegenden Stellen sind.

3. Venturikühler nach Anspruch 1 oder 2, dadurch gekennzeichnet, daß die Schikanen sich in Strömungsrichtung (1) erstreckende, verschwenkbare Fahnen (5) aufweisen.

4. Venturikühler nach Anspruch 3, dadurch gekennzeichnet, daß die verschwenkbaren Fahnen (5) eine in Strömungsrichtung (1) liegende Breite haben, die so groß ist wie der Abstand je zweier Rohre.

5. Venturikühler nach einem der Ansprüche 2 bis 4, dadurch gekennzeichnet, daß die verschwenkbaren Fahnen (2) an den die Rohre umgebenden, auf den Rohren (2) drehbar angeordneten Zylindern (4) befestigt sind, deren Öffnungen in Drehrichtung so groß sind, daß sie die Wassersprühdüsen (3) in jeder Stellung freilassen.

6. Venturikühler nach Anspruch 5, dadurch gekennzeichnet, daß je zwei Fahnen (5) beidseitig der Achse des drehbaren Zylinders (4) an dem Zylinder (4) befestigt und die Fahnen (5) am unteren Rand verbunden sind.

7. Venturikühler nach Anspruch 6, dadurch gekennzeichnet, daß die Verbindung der beiden Fahnen (5) an ihren unteren Enden scharfkantig ausgeführt ist.

8. Venturikühler nach Anspruch 6, dadurch gekennzeichnet, daß die Verbindung der beiden Fahnen (5) an ihrem unteren Ende abgerundet ausgeführt ist.

9. Venturikühler nach einem der Ansprüche 3 oder 4, dadurch gekennzeichnet, daß die verschwenkbaren Fahnen (5) an den Rohren (2) befestigt sind und die Rohre um ihre Achse drehbar gelagert sind.

## Claims

1. Venturi cooler for a flue-gas desulphurisation plant, having a plurality of tubes (2) arranged transversely to the longitudinal direction (1) of the cooler and having water spray nozzles (3), characterised in that chicanes reducing the flow cross-section of the Venturi cooler but leaving the outlet of the water spray nozzles (3) clear are arranged on the tubes (2).

2. Venturi cooler according to Claim 1, characterised in that the chicanes are cylinders (4) surrounding the tubes (2) and having openings at the points opposite the water spray nozzles (3).

3. Venturi cooler according to Claim 1 or 2, characterised in that the chicanes have pivotable vanes (5) extending in the direction of flow (1).

4. Venturi cooler according to Claim 3, characterised in that the pivotable vanes (5) have a width in the direction of flow (1) which is as great as the distance between two tubes.

5. Venturi cooler according to one of Claims 2 to 4, characterised in that the pivotable vanes (5) are fastened to the cylinders (4) surrounding the tubes and arranged rotatably on the tubes (2), the openings of which cylinders in the direction of rotation are of such a size that they leave the water spray nozzles (3) clear in every position.

6. Venturi cooler according to Claim 5, characterised in that two vanes (5) are fastened to the cylinder (4) on either side of the axis of the rotatable cylinder (4) and the vanes (5) are connected at the lower edge.

7. Venturi cooler according to Claim 6, characterised in that the connection of the two vanes (5) at their lower ends is of a sharp-edged configuration.

8. Venturi cooler according to Claim 6, characterised in that the connection of the two vanes (5) at their lower end is of a rounded configuration.

9. Venturi cooler according to one of Claims 3 or 4, characterised in that the pivotable vanes (5) are fastened to the tubes (2) and the tubes are mounted rotatably about their axis.

## Revendications

1. Refroidisseur du type venturi pour une installation de désulfuration de fumée avec plusieurs tuyaux (2) disposés transversalement au sens longitudinal du refroidisseur (1) et munis de pulvérisateurs d'eau (3) caractérisés par le fait que les tuyaux (2) sont équipés de chicanes réduisant la section de passage du refroidisseur du type venturi et laissant ouverte la sortie des pulvérisateurs d'eau (3).

2. Refroidisseur du type venturi selon revendication 1 caractérisé par le fait que les chicanes sont des cylindres (4) entourant les tuyaux (2) et ayant des orifices aux endroits opposés aux pulvérisateurs d'eau (3).

3. Refroidisseur du type venturi selon revendication 1 ou 2 caractérisé par le fait que les chicanes présentent des bandes en tôle (5) pivotables s'étendant dans le sens de passage (1).

4. Refroidisseur du type venturi selon revendication 3 caractérisé par le fait que les bandes en tôle (5) pivotables présentent dans le sens de passage (1) une largeur égale à la distance entre deux tuyaux.

5. Refroidisseur du type venturi selon une des revendications 2 à 4 caractérisé par le fait que les bandes en tôles (5) pivotables sont attachées aux cylindres (4) entourant les tuyaux (2) et disposés sur ceux-ci de façon mobile et que les orifices des cylindres (4) sont dimensionnés dans le sens de rotation de manière à ce que, dans chaque position, ils laissent ouverts les pulvérisateurs d'eau (3).

6. Refroidisseur du type venturi selon revendication 5 caractérisé par le fait que les bandes en tôle (5) sont attachées au cylindre (4) par groupes de deux de part et d'autre de l'axe du cylindre (4) mobile et que les bandes en tôle (5) sont jointes à leurs bouts inférieurs.

7. Refroidisseur du type venturi selon revendication 6 caractérisé par le fait que la jonction des bouts inférieurs des deux bandes en tôle (5) est du type à bord vif.

8. Refroidisseur du type venturi selon revendication 6 caractérisé par le fait que la jonction des bouts inférieurs des deux bandes en tôle (5) est du type à bord arrondi.

9. Refroidisseur du type venturi selon revendication 3 ou 4 caractérisé par le fait que les bandes en tôle (5) pivotables sont attachées aux tuyaux (2) et que les tuyaux sont logés de façon mobile autour de leurs axes.

FIG. 1

FIG. 2

FIG. 3

FIG. 4

FIG. 5